# EUROPEAN PATENT APPLICATION

(11) **EP 2 657 084 A1**
(43) Date of publication of application: **30.10.2013**
(21) Application number: 13156388.4
(22) Date of filing: 22.02.2013
(51) Int. Cl.: B60Q 3/02, B60Q 11/00

(54) **Lighting control device for vehicle, lighting control system for vehicle, and lighting control method for vehicle**

(30) Priority: 25.04.2012 JP 2012100006
(71) Applicant: Toshiba Lighting & Technology Corporation, Yokosuka-shi Kanagawa 237-8510 (JP)
(72) Inventor: Hashimoto, Yutaka, Kanagawa, 237-8510 (JP); Oishi, Takafumi, Kanagawa, 237-8510 (JP); Ito, Kenichi, Kanagawa, 237-8510 (JP); Matsuda, Mitsuhiro, Kanagawa, 237-8510 (JP); Nishiie, Mitsuhiko, Kanagawa, 237-8510 (JP); Ishii, Yasuhiko, Kanagawa, 237-8510 (JP); Karasawa, Shinichi, Kanagawa, 237-8510 (JP)
(74) Representative: Bokinge, Ole

(57) **Abstract**

A lighting control device for a vehicle according to the embodiment includes a display unit (8) ; a control device reception unit which receives non-lighted state information of a light source of a lighting system; and a control device control circuit (2) which changes a display state of the display unit (8) based on the non-lighted state information.

## Description

### CROSS-REFERENCE TO RELATED APPLICATION

This application is based upon and claims the benefit of priority from the Japanese Patent Application No. 2012-100006 filed on April 25, 2012, the entire contents of all of which are incorporated herein by reference.

### FIELD

Embodiments described herein relate generally to a lighting control device for a vehicle, a lighting control system for a vehicle, and a lighting control method for a vehicle.

### BACKGROUND

In a train light automatic flash system, or a passenger room light control system, an optical output of a light source of a lighting system was controlled by detecting illuminance by providing a photo conductor, or an illuminance detection circuit, respectively.

However, in the train light automatic flash system, or the passenger room light control system, it was difficult to appropriately control an optical output of a lighting system when illuminance is drastically changed, or when high-low illuminance is repeated, since the optical output of the light source of the lighting system is controlled by detecting illuminance. In addition, Patent Documents relating to the above described technology are presented below, and the entire contents are included by being quoted.

[Patent Document 1] JP-UM-B-35-028822
[Patent Document 2] JP-A-7-061283

### BRIEF DESCRIPTION OF THE DRAWINGS

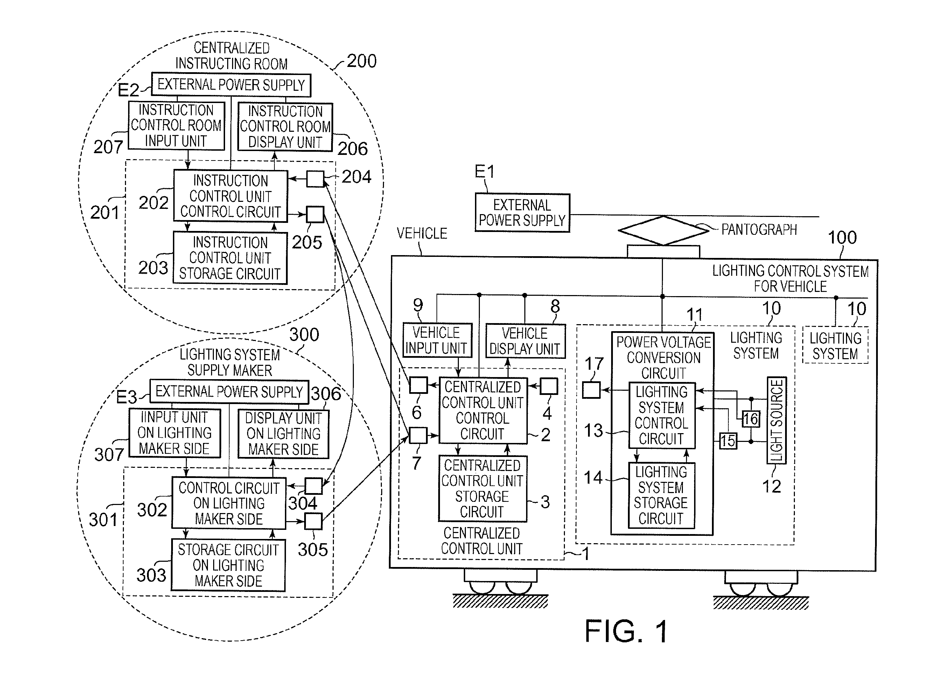

FIG. 1 is an explanatory diagram which illustrates a lighting control device for a vehicle, a lighting control system for a vehicle, and a lighting control method for a vehicle according to a first embodiment, and describes an ordering method of a lighting system for a vehicle according to a second embodiment.

### DETAILED DESCRIPTION

In view of the above circumstances, a lighting control device for a vehicle according to an embodiment includes a display unit, a control device reception unit which receives non-lighted state information of a light source of a lighting system, and a control device control circuit which changes a display state of the display unit based on the non-lighted state information.

Further, a lighting control system for a vehicle according to an embodiment includes a lighting control device for a vehicle according to the embodiment; and a lighting system which has a light source, a non-lighted state detection circuit which detects a non-lighted state of the light source, and a lighting system transmission unit which transmits information relating to the non-lighted state.

Further, a lighting control method for a vehicle according to an embodiment includes detecting a non-lighted state of a light source of a lighting system; transmitting information relating to the non-lighted state; receiving the non-lighted state information which is transmitted; changing a display state of a display unit based on the received non-lighted state information.

According to an aspect of the embodiments, it is possible to provide a lighting control device for a vehicle which is able to prevent an unstable operation of an optical output of a lighting system.

In addition, it is possible to provide a lighting control system for a vehicle which is able to prevent an unstable operation of an optical output of a lighting system.

In addition, it is possible to provide a lighting control method for a vehicle which is able to prevent an unstable operation of an optical output of a lighting system.

In addition, it is possible to prevent the unstable operation of the optical output of the lighting system.

### First Embodiment

Hereinafter, a lighting control device for a vehicle, and a lighting control system for a vehicle, and a lighting control method for a vehicle according to the embodiments will be described with reference to a drawing. FIG. 1 is an explanatory diagram which illustrates a lighting control device for a vehicle, a lighting control system for a vehicle, and describes a lighting control method for a vehicle according to a first embodiment.

A lighting control device for a vehicle according to an embodiment 1a includes a display unit, a control device reception unit which receives non-lighted state information of a light source of a lighting system, and a control device control circuit which changes a display state of the display unit based on the non-lighted state information.

A lighting control system for a vehicle according to an embodiment 1b includes a lighting control system for a vehicle according to the embodiment 1a, and a lighting system which has a light source, a non-lighted state detection circuit which detects a non-lighted state of the light source, and a lighting system transmission unit which transmits information relating to the non-lighted state.

A lighting control method for a vehicle according to an embodiment 1c includes detecting a non-lighted state of a light source of a lighting system; transmitting information relating to the non-lighted state; receiving the non-lighted state information which is transmitted; and changing a display state of a display unit based on the received non-lighted state information.

As a lighting control device for a vehicle according to the first embodiment, configurations of a centralized control unit 1 and a lighting control system for a vehicle 100 will be described below.

The lighting control system for a vehicle 100 includes the centralized control unit 1, a vehicle input unit 9 for operating the centralized control unit 1, a vehicle display unit 8 as a display monitor of the centralized control unit 1, and a plurality of lighting systems 10.

In the centralized control unit 1, the vehicle display unit 8, the vehicle input unit 9, and the lighting system 10, power is supplied from an external power supply E1 through a pantograph of a vehicle.

As the vehicle display unit 8, a liquid crystal display, a cathode ray tube, or the like is used.

As the vehicle input unit 9, a keyboard or button, a touch panel, or the like is used.

Configurations of the centralized control unit 1 and the lighting system 10 will be described later in detail.

The lighting system 10 includes the light source 12; a power voltage conversion circuit 11 which is connected to the light source 12, converts a voltage of power which is supplied from an external power supply E1, and supplies a constant current to the light source 12; an output current detection circuit 15 which is provided between the light source 12 and the power voltage conversion circuit 11, and detects a current which is supplied to the light source 12, an output voltage detection circuit 16 which is provided between the light source 12 and the power voltage conversion circuit 11, and detects a voltage which is applied to the light source 12, and a lighting system transmission unit 17 which sends out information of the lighting system control circuit 13 to the centralized control unit 1.

In addition, the power voltage conversion circuit 11 of the lighting system 10 includes a lighting system control circuit 13 which controls the power voltage conversion circuit 11, and a lighting system storage circuit 14 which stores information to be transmitted by the lighting system transmission unit 17, or stores a current value which is detected by the output current detection circuit 15, or a voltage value which is detected by the output voltage detection circuit 16.

As the power voltage conversion circuit 11, it is possible to adopt a chopper circuit of a step-down type, a step-up type, a step-up/step-down type, or the like.

As the light source 12, it is possible to adopt various light sources, and a combination of these light sources such as an incandescent lamp, a fluorescent lamp, a light emitting diode, an organic EL (Organic Electro-Luminescence).

The output current detection circuit 15 is configured by a resistor, or the like, and is provided at a current path on a low voltage side, between the power voltage conversion circuit 11 and the light source 12. In addition, the output current detection circuit 15 is connected to the lighting system control circuit 13, and a current value which is detected by the output current detection circuit 15 is input to the lighting system control circuit 13.

The output voltage detection circuit 16 is configured by a resistor, or the like, and is provided in parallel with the light source 12, between the power voltage conversion circuit 11 and the light source 12. In addition, the output voltage detection circuit 16 is connected to the lighting system control circuit 13, and a voltage value which is detected by the output voltage detection circuit 16 is input to the lighting system control circuit 13.

The lighting system transmission unit 17 may be any transmission unit when the unit can send out information of the lighting system control circuit 13 to the centralized control unit 1, however, when the information is sent in a wired manner, the lighting system transmission unit 17 corresponds to a terminal block to which a signal line is connected, and when a control signal is sent wirelessly, the lighting system transmission unit 17 corresponds to an infrared light receiving unit, a wireless antenna, or the like.

As the lighting system control circuit 13, it is possible to adopt a microcomputer, a DSP (Digital Signal Processor), or the like.

The lighting system storage circuit 14 is connected to the lighting system control circuit 13, and stores information to be sent out from the lighting system transmission unit 17, a current value which is detected by the output current detection circuit 15, or a voltage value which is detected by the output voltage detection circuit 16. As the lighting system storage circuit 14, it is possible to adopt various memories such as a flash memory.

In addition, the lighting system control circuit 13 and the lighting system storage circuit 14 may be integrally provided.

Subsequently, a configuration of the centralized control unit 1 will be described in detail.

The centralized control unit 1 includes a vehicle external information transmission unit 6 which sends out information to a centralized instructing room 200 which will be described later. A configuration of the vehicle external information transmission unit 6 is not limited as long as the unit is able to transmit information (for example, antenna, or the like). The vehicle external information transmission unit 6 is connected to a centralized control unit control circuit 2 which controls the centralized control unit 1. In addition, the centralized control unit control circuit 2 includes a vehicle external information receiving unit 7 which receives a position information signal of a vehicle which is sent out from the centralized control unit 1.

The centralized control unit control circuit 2 is configured by a microcomputer, a DSP (Digital Signal Processor), or the like, is connected to the vehicle input unit 9, and is input with information which is input from the vehicle input unit 9. In addition, the centralized control unit control circuit 2 is connected with the vehicle display unit 8, and an operation result, or a control result using the centralized control unit control circuit 2 is displayed on the vehicle display unit 8.

The centralized control unit control circuit 2 is input with information which is received by a centralized control unit receiving unit 4 which will be described, and generates a control signal which varies display contents of the vehicle display unit 8 based on the received information. The display contents of the vehicle display unit 8 are varied according to the control signal which is generated by the centralized control unit control circuit 2.

The centralized control unit receiving unit 4 is connected to the centralized control unit control circuit 2, and when a control signal is sent in a wired manner, a terminal block to which a signal line is connected corresponds to the centralized control unit receiving unit, and when the control signal is sent wirelessly, a wireless antenna, or the like, corresponds to the centralized control unit receiving unit.

The centralized control unit 1 includes a centralized control unit storage circuit 3 which is connected to the centralized control unit control circuit 2. The centralized control unit storage circuit 3 stores a signal based on position information received by the centralized control unit receiving unit 4 or information input from the vehicle input unit 9.

Operations of the centralized control unit 1 and the lighting control system for a vehicle 100, and lighting control method for a vehicle according to the first embodiment will be described.

The power voltage conversion circuit 11 of the lighting system 10 converts a voltage of power supplied from the external power supply E1, and supplies a constant current to the light source 12 when the lighting system control circuit 13 is operated based on a threshold value of an operation frequency, a current, or a voltage which is stored in the lighting system storage circuit 14.

The light source 12 is lit up by power which is supplied from the power voltage conversion circuit 11. An output current and an output voltage when the light source 12 is lit up are detected in the output current detection circuit 15 and the output voltage detection circuit 16, respectively, and detection results are input to the lighting system control circuit 13.

The lighting system control circuit 13 controls the power voltage conversion circuit 11 based on information which is stored in the lighting system storage circuit 14, and a detection result which is detected by the output current detection circuit 15 and the output voltage detection circuit 16. The information which is stored in the lighting system storage circuit 14 includes a current value which is supplied to the light source 12, a voltage value which is applied to the light source 12, a dimming level, or the like.

The lighting system control circuit 13 detects an open destruction of the light source 12 by comparing an output current which is detected by the output current detection circuit 15 to a current threshold value which is stored in the lighting system storage circuit 14. Information on the open destruction of the light source 12 is sent out from the lighting system transmission unit 17, is received by the centralized control unit receiving unit 4, and is input to the centralized control unit control circuit 2. The centralized control unit control circuit 2 controls the vehicle display unit 8 based on the information on the open destruction of the light source 12 so that the information is displayed on the vehicle display unit 8.

In addition, similarly, the lighting system control circuit 13 detects short circuit breaking of the light source 12 by comparing an output voltage which is detected by the output voltage detection circuit 16 to a voltage threshold value which is stored in the lighting system storage circuit 14. The information on the short circuit breaking of the light source 12 is sent out from the lighting system transmission unit 17, is received by the centralized control unit receiving unit 4, and is input to the centralized control unit control circuit 2. The centralized control unit control circuit 2 controls the vehicle display unit 8 so that the information is displayed on the vehicle display unit 8 based on the information on the short circuit breaking of the light source 12.

The centralized control unit 1, the lighting control system for a vehicle 100, and effects of the lighting control method for a vehicle according to the first embodiment will be described.

In the centralized control unit 1, the lighting control system for a vehicle 100, and the lighting control method for a vehicle according to the first embodiment, since the lighting system 10 includes the output current detection circuit 15 and the output voltage detection circuit 16, and the centralized control unit control circuit 2 of the centralized control unit 1 controls the vehicle display unit 8 so as to display the information thereon based on the information on the open destruction or the information on the short circuit breaking of the light source 12, it is possible to rapidly inform the crew of a vehicle such as a vehicle driver or a vehicle conductor of non-lighting of the light source 12 of the lighting system 10, and to take appropriate action.

In the centralized control unit 1, the lighting control system for a vehicle 100, and the lighting control method for a vehicle according to the first embodiment, since the information on the open destruction or the information on the short circuit breaking, of the light source 12 is stored in the centralized control unit storage circuit 3, it enables the crew of a vehicle such as the vehicle driver or the vehicle conductor, to omit confirming of the non-lighting of the lighting system 10 by viewing before operating a vehicle.

In the centralized control unit 1, the lighting control system for a vehicle 100, and the lighting control method for a vehicle according to the first embodiment, since it is possible to integrally perform a control of the lighting system 10 by including the centralized control unit 1, the lighting system 10 can be controlled without operations of the crew of a vehicle such as the vehicle driver or the vehicle conductor.

In the centralized control unit 1, the lighting control system for a vehicle 100, and the lighting control method for a vehicle according to the first embodiment, since the control of the lighting system 10 can be integrally performed by including the centralized control unit 1, it is possible to light up the lighting system 10 using a smaller amount of energy.

In the centralized control unit 1, the lighting control system for a vehicle 100, and the lighting control method for a vehicle according to the first embodiment, since the control of the lighting system 10 can be integrally performed by including the centralized control unit 1, it is possible to reduce a burden on the crew of a train such as the train driver or the train conductor.
Modification examples of the first embodiment will be described below.

The lighting system 10 may be provided with a lighting system receiving unit (not shown) which receives information which is stored in the centralized control unit storage circuit 3 of the centralized control unit 1, or information which is input by the vehicle input unit 9.

Further, the centralized control unit 1 may be provided with a centralized control unit transmission unit which transmits information to the lighting system receiving unit of the lighting system 10 which is not shown.

In addition, the centralized control unit 1 may be provided as a vehicle control unit in each vehicle, and in such a case, an illuminance control of the lighting system is performed for each vehicle. By providing a vehicle control unit, it is possible to construct a lighting control system for a vehicle which can easily cope with a change in a vehicle formation.

### Second Embodiment

Hereinafter, an ordering method of a lighting system for a vehicle according to an embodiment will be described with reference to a drawing. FIG. 1 is an explanatory diagram which describes the ordering method of a lighting system for a vehicle according to the second embodiment. In addition, the same portions as those in the first embodiment will be given the same reference numerals, and repeated descriptions will be omitted.

The ordering method of a lighting system for a vehicle according to the second embodiment includes detecting a non-lighted state of a light source of a lighting system; transmitting information relating to the non-lighted state; receiving the non-lighted state information which is transmitted; and ordering a lighting system based on the received non-lighted state information.

A configuration of a centralized instructing room 200 will be described.

The centralized instructing room 200 includes an instruction control unit 201, an instruction control room input unit 207 which operates the instruction control unit 201, and an instruction control room display unit 206 as a display monitor of the instruction control unit 201.

In the instruction control unit 201, the instruction control room display unit 206, and the instruction control room input unit 207, power is supplied from an external power supply E2.

As the instruction control room display unit 206, a liquid crystal display, a cathode ray tube, or the like is used.

As the instruction control room input unit 207, a keyboard or a button, a touch panel or the like is used.

Subsequently, a configuration of the instruction control unit 201 will be described in detail.

To an instruction control unit control circuit 202, an instruction control room receiving unit 204 which receives information of a vehicle external information transmission unit 6 of the centralized control unit 1 is connected. A configuration of the instruction control room receiving unit 204 is not limited as long as the unit is a unit which is able to receive information (for example, antenna, or the like).

The instruction control unit 201 may include an instruction control room transmission unit 205 for transmitting information which is generated by the instruction control unit control circuit 202, which will be described later. The configuration of the instruction control room transmission unit 205 is not limited as long as the unit is able to transmit information (for example, antenna, or the like). The instruction control room transmission unit 205 is connected to the instruction control unit control circuit 202 which controls the instruction control unit 201. Information which is sent out from the instruction control room transmission unit 205 is received by the vehicle external information receiving unit 7.

The instruction control unit control circuit 202 is configured by a microcomputer, a DSP (Digital Signal Processor), or the like, is connected to the instruction control room input unit 207, and is input with information which is input from the instruction control room input unit 207. In addition, the instruction control unit control circuit 202 is connected with the instruction control room display unit 206, and an operation result, or a control result obtained by the instruction control unit control circuit 202 is displayed on the instruction control room display unit 206.

The instruction control unit 201 includes an instruction control unit storage circuit 203 which is connected to the instruction control unit control circuit 202. The instruction control unit storage circuit 203 stores a signal based on internal information of the centralized control unit 1 which is received by the instruction control room receiving unit 204, or information which is input from the instruction control room input unit 207.

Subsequently, a configuration of a lighting system supply maker 300 will be described.

The lighting system supply maker 300 includes a lighting system supply maker control unit 301, an input device on lighting maker side 307 which operates the lighting system supply maker control unit 301, and a display unit on lighting maker side 306 as a display monitor of the lighting system supply maker control unit 301.

In the lighting system supply maker control unit 301, the display unit on lighting maker side 306, and the input device on lighting maker side 307, power is supplied from the external power supply E3.

As the display unit on lighting maker side 306, a liquid crystal display, a cathode ray tube, or the like is used.

As the input device on lighting maker side 307, a keyboard or a button, a touch panel, or the like is used.

Subsequently, a configuration of the lighting system supply maker control unit 301 will be described in detail.

The lighting system supply maker control unit 301 includes a transmission unit on lighting maker side 305 which transmits confirmation information on ordering of the lighting system 10 which is generated by a control circuit on lighting maker side 302 which will be described later. A configuration of the transmission unit on lighting maker side 305 is not limited as long as the unit is able to transmit the confirmation information (for example, antenna, or the like). The transmission unit on lighting maker side 305 is connected to the control circuit on lighting maker side 302 which controls the lighting system supply maker control unit 301. In addition, the control circuit on lighting maker side 302 is connected with a receiving unit on lighting maker side 304 which receives order information of the instruction control room transmission unit 205 of the instruction control unit 201.

The control circuit on lighting maker side 302 is configured by a microcomputer, a DSP (Digital Signal Processor), or the like, is connected to the input unit on lighting maker side 307, and is input with information which is input from the input unit on lighting maker side 307. In addition, the control circuit on lighting maker side 302 is connected with the display unit on lighting maker side 306, and an operation result or a control result which is obtained by the control circuit on lighting maker side 302 is displayed thereon.

The lighting system supply maker control unit 301 includes a storage circuit on lighting maker side 303 which is connected to the control circuit on lighting maker side 302. The storage circuit on lighting maker side 303 is stored with order information which is received by the receiving unit on lighting maker side 304, or confirmation information on ordering by the control circuit on lighting maker side 302.

A method of ordering a lighting system for a vehicle according to the second embodiment will be described.

When a fluctuation in an output voltage or an output current due to the short circuit breaking or the open destruction in the light source 12 is detected by the output voltage detection circuit 16 or the output current detection circuit 15, and an abnormality of the lighting system 10 such as the light source 12 is determined by the lighting system control circuit 13 based on the information, the abnormality information is sent out from the lighting system transmission unit 17, and the sent information is received by the centralized control unit receiving unit 4.

The abnormality information of the lighting system 10 is sent out from the vehicle external information transmission unit 6 through the centralized control unit control circuit 2. The sent abnormality information is received by the instruction control room receiving unit 204, and is input to the instruction control unit control circuit 202 of the instruction control unit 201 of the centralized instructing room 200. The instruction control unit control circuit 202 determines whether or not ordering of the lighting system 10 is necessary using the abnormality information. In the ordering of the lighting system, ordering of components which are necessary for the lighting system is assumed to be also included. When the ordering of the lighting system 10 is necessary, the instruction control unit control circuit 202 sends out order information of the lighting system 10 from the instruction control room transmission unit 205.

The order information which is sent out from the instruction control room transmission unit 205 is received by the receiving unit on lighting maker side 304 of the lighting system supply maker 300. When receiving the order information, the control circuit on lighting maker side 302 of the lighting system supply maker control unit 301 confirms the ordering of the lighting system 10, and stores the information in the control circuit on lighting maker side 303.

The control circuit on lighting maker side 302 sends out the ordering confirmation of the lighting system 10 from the transmission unit on lighting maker side 305 as confirmation information. The confirmation information may be received by the vehicle external information receiving unit 7 of the centralized control unit 1, or may be received by the instruction control room receiving unit 204 of the instruction control unit 201. When receiving the confirmation information, the instruction control unit control circuit 202 of the instruction control unit 201, or the centralized control unit control circuit 2 of the centralized control unit 1 respectively causes the instruction control room display unit 206 or the vehicle display unit 8 to display the confirmation of ordering of the lighting system 10.

Effects of a method of ordering a lighting system for a vehicle according to the second embodiment will be described.

In the method of ordering the lighting system for a vehicle according to the second embodiment, since an abnormal state such as non-lighting of a light source 12 of a lighting system 10 which is provided in a vehicle is detected, and rapid ordering is placed with respect to a lighting system supply maker 300, it is possible to perform repair of the lighting system 10 rapidly.

In the method of ordering the lighting system for a vehicle according to the second embodiment, since confirmation information is transmitted to the centralized control unit 1 or the instruction control unit 201, after confirming ordering with respect to the lighting system supply maker 300, it is possible to confirm that ordering of the lighting system 10 is confirmed.

Some exemplary embodiments were described, however, these embodiments or examples are suggested as examples, and are not intended limit the range of the invention. These new embodiments or examples can be executed in various forms other than those, and various omissions, substitutions, and changes may be performed without departing from the gist of the invention. These embodiments, examples, or modifications thereof are included in the range, or gist of the invention, and are included in the invention which is disclosed in the claims of the invention, and the scope of the equivalents thereof.

## Claims

1. A lighting control device for a vehicle comprising:
a vehicle external information receiving unit (7) which receives a signal which is sent out from an instruction control unit (201) which controls an operation of the vehicle from outside of a vehicle;
a control circuit (2) which generates a control signal which controls a lighting system (10) based on the signal which is sent out from the instruction control unit (201) which is received by the vehicle external information receiving unit (7); and
a transmission unit which transmits the control signal which is generated in the control circuit (2) to the lighting system (10).

2. A lighting control system for a vehicle comprising:
the lighting control device for a vehicle according to claim 1; and
a lighting system (10) which includes a receiving unit which receives a control signal which is transmitted from a transmission unit of the lighting control device for a vehicle (1).

3. A lighting control method for a vehicle comprising:
receiving a signal which is sent out from outside of the vehicle;
generating a control signal which controls a lighting system (10) based on the signal which is sent out from the outside of the vehicle;
transmitting a control signal to the lighting system (10); and
receiving the control signal by the lighting system (10).
